# EUROPÄISCHE PATENTANMELDUNG

(11) **EP 2 369 184 A2**
(43) Veröffentlichungstag der Anmeldung: **28.09.2011**
(21) Anmeldenummer: 11000177.3
(22) Anmeldetag: 12.01.2011
(51) Int. Cl.: F16B 5/02

(54) **Vorrichtung mit selbsttätigem Ausgleich von fertigungs- oder montagebedingten Toleranzen zum Abstützen eines ersten Bauteils an einem zweiten Bauteil**

(30) Priorität: 09.03.2010 DE 202010003368 U
(71) Anmelder: Peguform GmbH, 79268 Bötzingen (DE)
(72) Erfinder: Ruder, Jürgen, 85092 Kösching (DE)
(74) Vertreter: Patentanwälte Westphal, Mussgnug & Partner

(57) **Zusammenfassung**

Vorrichtung 1 zum Abstützen eines ersten Bauteils 2 an einem zweiten Bauteil 3 mit selbsttätigem Ausgleich von fertigungsmontagebedingten Toleranzen zwischen den beiden Bauteilen 2, 3, wobei die Abstützvorrichtung 1 ein an einem ersten, oberen Ende eine Bohrung 6 zur Aufnahme einer Verstellschraube 7 und an einem zweiten, unteren Ende eine Abstützfläche 8 aufweisendes, zumindest teilweise als Gewindestange ausgebildetes Verstellelement 4 mit einem Außengewinde 9 sowie ein eine zumindest teilweise mit einem Innengewinde 10 ausgestattete durchgehende Bohrung 11 aufweisendes Aufnahmeelement 5 zur Aufnahme des Verstellelements 4 umfasst.

## Beschreibung

Die vorliegende Erfindung betrifft eine Vorrichtung zum Abstützen eines ersten Bauteils an einem zweiten Bauteil mit selbsttätigem Ausgleich von fertigungs- und montagebedingten Toleranzen zwischen den beiden Bauteilen.

Es sind zahlreiche Vorrichtungen bekannt, mit deren Hilfe Bauteile aneinander angeglichen werden, wobei diese Vorrichtung insbesondere in der Möbel- oder Automobilindustrie Anwendung finden, wo großflächige Bauteile mit optisch einwandfreien Fugen zueinander angeordnet werden müssen. Derartige Vorrichtungen werden beispielsweise in der DE 10 2004 050 625 A1, der DE 10 2006 040 759 B3 oder der DE 10 2005 044 064 A1 beschrieben. Die in den oben genannten Dokumenten beschriebenen Vorrichtungen werden dazu genutzt, um zwei Bauteile relativ zueinander einzustellen und die gewählte Einstellung zu sichern. Als Abstützvorrichtungen, insbesondere wenn es darum geht, das erste Bauteil an einem zweiten Bauteil abzustützen, um ein Absinken oder Absetzen des ersten Bauteils zu verhindern und damit den Abstand des ersten Bauteils zu einem dritten Bauteil auch nach Dauerbelastung zu garantieren, um beispielsweise einen einwandfreien Fugenverlauf zwischen dem ersten und dem dritten Bauteil auf Dauer zu gewährleisten, sind die oben genannten Einstellvorrichtungen nicht geeignet.

In der DE 60 2005 006 327 wird eine Innenverkleidung eines Kühlergrills beschrieben, die Mittel zum Abstützen aufweist, wobei die Innenverkleidung zum Positionieren des Kühlergrills vorgesehen ist. Bei den Mittel zum Abstützen handelt es sich um einen an der Innenverkleidung des Kühlergrills angeordneten Träger, auf dem der Kühlergrill aufliegt. Ein selbsttätiger Ausgleich von fertigungs- oder montagebedingten Toleranzen ist mit dieser Art von Abstützung nicht möglich.

Es besteht somit weiterhin das Problem, eine Vorrichtung zu finden, die die Nachteile des Standes der Technik nicht aufweist und insbesondere dafür geeignet ist, ein erstes Bauteil an einem zweiten Bauteil mit selbsttätigem Ausgleich von fertigungs- und montagebedingten Toleranzen abzustützen, um auf diese Weise ein Absinken oder Absetzen des ersten Bauteils zu verhindern und damit die Anordnung des ersten Bauteils relativ zu einem dritten Bauteil auch bei einer Dauerbelastung zu sichern.

Gelöst wird die Aufgabe durch eine Vorrichtung mit den Merkmalen des Anspruchs 1. Vorteilhafte Ausgestaltungen und Weiterentwicklungen der Vorrichtung sind Gegenstand der Unteransprüche.

Die erfindungsgemäße Vorrichtung zum Abstützen eines ersten Bauteils an einem zweiten Bauteil ist so konzipiert, dass ein selbsttätiger Ausgleich von fertigungs- und montagebedingten Toleranzen zwischen den beiden Bauteilen beim Einsatz der Vorrichtung stattfindet. Dabei besteht die Vorrichtung aus einem Aufnahmeelement und einem Verstellelement, wobei das Verstellelement zumindest teilweise als Gewindestange ausgebildet ist und an seinem ersten mit einem Außengewinde versehenen oberen Ende eine Bohrung zur Aufnahme einer Verstellschraube aufweist, während an seinem zweiten unteren Ende eine Abstützfläche angeordnet ist. Das Aufnahmeelement ist zur Aufnahme des Verstellelements vorgesehen und besitzt dafür eine durchgehende Bohrung, die zumindest teilweise mit einem Innengewinde ausgestattet ist.

Das Funktionsprinzip der Vorrichtung beruht darauf, dass das Aufnahmeelement entweder fest mit dem abzustützenden ersten Bauteil verbunden ist oder sogar Teil des abzustützenden ersten Bauteils ist. Im ersten Fall ist die Vorrichtung als separates Bauteil ausgebildet und über das Aufnahmeelement mit dem abzustützenden ersten Bauteil verbunden. Die Verbindung zum zweiten Bauteil erfolgt über die Abstützfläche des Verstellelements, die zur Auf- bzw. Anlage auf dem stützenden zweiten Bauteil vorgesehen ist. So kann beispielsweise die Vorrichtung zum Abstützen mit einer entsprechenden abzustützenden Innenverkleidung verbunden oder auch ein Teil dieser Innenverkleidung sein.

Im oberen, mit einem Außengewinde versehenen Bereich des Verstellelements, im Bereich der Bohrung für die Verstellschraube, sind mindestens zwei Längsschlitze vorgesehen, die bei entsprechendem Eindringen der Schraube ins Bohrloch ein Aufspreizen des Verstellelements in diesem Bereich ermöglichen.

Darüber hinaus weist das Verstellelement als mindestens zwei, quer zum Gewindeverlauf im Gewindegang angeordnete Zähne auf, während das Aufnahmeelement als Gegenstück eine in axialer Richtung auf der Flanke des Innengewindes quer zum Gewindeverlauf angeordnete Verzahnung aufweist, die als korrespondierende Aufnahme für die oben genannten im Gewindegang des Verstellelements angeordneten Zähne vorgesehen ist.

Sowohl Verstellelement als auch Aufnahmeelement sind üblicherweise aus einem thermoplastischen Kunststoff gefertigt, wobei in diesem Zusammenhang erwähnt werden soll, dass die Vorrichtung generell vor allem für den Einsatz bei Bauteilen aus Kunststoff vorgesehen ist.

Als Verstellschraube ist vorzugsweise eine Metallschraube vorgesehen, die in die Bohrung am oberen Ende des Verstellelementes eingreift und vorteilhaft ein kunststoffgerechtes bzw. symmetrisches Gewinde aufweist, während die Spitze der Verstellschraube vorzugsweise ohne Gewinde, in Form einer Spitze eines Nagels ausgebildet ist.

Die Funktionsweise der Abstützvorrichtung beruht darauf, dass zunächst das Verstellelement, das teilweise als Gewindestange ausgebildet ist und in seinem oberen Bereich ein Außengewinde aufweist, in das Aufnahmeelement, das eine mit einem Innengewinde ausgestattete, durchgehende Bohrung aufweist, eingedreht wird. Das Aufnahmeelement ist dabei fest mit dem abzustützenden ersten Bauteil verbunden bzw. ist ein Teil des abzustützenden ersten Bauteils. Nach dem Eindrehen des Verstellelements befindet sich die Abstützfläche, die an dem unteren Ende des Verstellelementes angeordnet ist, in einem definierten Abstand von beispielsweise ca. 3 bis 15 mm zum stützenden zweiten Bauteil. Nun wird die Verstellschraube in die Bohrung am oberen Ende des Verstellelements eingedreht, wobei durch den höheren Reibschluss der Schraube in der Bohrung im Verstellelement zunächst das gesamte Verstellelement in das Aufnahmeelement eingedreht wird, bis die Abstützfläche auf dem stützenden zweiten Bauteil zur Anlage kommt. Nun ist der Reibschluss des Verstellelementes mit der Abstützfläche auf dem stützenden Bauteil größer als der der Schraube in der Bohrung, sodass die Schraube nun weiter in das Verstellelement eingedreht wird. Die Schraube dringt weiter in die Bohrung ein, bis der Klemmbereich erreicht ist, der durch die mindestens beiden axial verlaufenden Schlitze im Verstellelement im Bereich der Bohrung charakterisiert ist, die ein Aufspreizen des Verstellelementes ermöglichen. Durch die ebenfalls mindestens zwei quer zum Gewindeverlauf im Gewindegang angeordneten axial verlaufenden Zähne des Verstellelements wird beim Aufspreizen des Verstellelements das weitere Eindrehen gehemmt und das Verstellelement wird so gegen ein weiteres Verstellen gesichert.

Konstruktionsbedingt erzeugt diese Art der Abstützung eine Vorspannung zwischen den beiden Bauteilen. Dies wird häufig gewünscht, um beispielsweise im Vorfeld dem unerwünschten Setzverhalten von Kunststoffteilen entgegenzuwirken. Sollte dagegen eine hohe Vorspannung unerwünscht sein, so kann bei einer vorteilhaften Ausgestaltung der vorliegenden Erfindung durch Bekleben der Abstützfläche des Verstellelementes mit einer gleithemmenden Folie, wie z. B. einer PU-Folie mit rauer Oberfläche, oder durch direktes Aufrauen der Oberfläche der Abstützfläche der Reibschluss zwischen Abstützfläche und dem zweiten Bauteil erhöht werden, sodass die Blockierung der Verstellschraube früher erfolgt.

Ein Beispiel für eine vorteilhafte Anwendung der vorliegenden Erfindung ist die Abstützung eines mit einem Kühlerschutzgitter kombinierten Stoßfängers im Frontendbereich eines Fahrzeugs. Hier werden hohe Anforderungen an das optische Erscheinungsbild gestellt, die beispielsweise ihren Ausdruck darin finden, dass das Kühlerschutzgitter sich auch bei einer Dauerbelastung maximal um einen vorgegebenen Wert absenken darf. Im Rahmen der vorliegenden Arbeiten wurde gefunden, dass mit Hilfe der erfindungsgemäßen Abstützvorrichtung die Lastenheftvorgaben für diesen Montagebereich problemlos erfüllt werden können, wobei die Abstützvorrichtung den zusätzlichen Vorteil hat, dass sie kostengünstig herstellbar ist, keine zusätzlichen Justier― oder Einstellvorgänge für den Fahrzeughersteller bedingt und vor allem auch keine Verschlechterung der gesetzlichen Anforderungen insbesondere in Bezug auf Fußgängerschutz mit sich bringt. Dadurch, dass die Abstützvorrichtung nur mit dem abzustützenden ersten Bauteil, nämlich dem Kühlerschutzgitter, fest verbunden ist, und auf dem Querträger lediglich aufsitzt, ist im Falle eines Aufpralls eine Verschiebung auf dem Querträger möglich, sodass durch die Abstützvorrichtung kein zusätzlicher Widerstand aufgebaut wird, auf Grund dessen der Fußgängerschutz eventuell gemindert werden könnte.

Zwar wurde die erfindungsgemäße Vorrichtung primär für den Einsatz im Automobilbereich entwickelt und kann besonders vorteilhaft im Frontendbereich eingesetzt werden, um die dort eingesetzten sichtbaren Bauteile, wie z. B. Kühlergrill oder Stoßfänger relativ zu weiteren Bauteilen einzustellen und zu fixieren. Darin ist jedoch keine Einschränkung zu sehen, denn die erfindungsgemäße Abstützvorrichtung kann allgemein dort vorteilhafter eingesetzt werden, wo ein erstes Bauteil an einem zweiten Bauteil abgestützt werden soll, um dadurch die relative Lage zueinander bzw. zu einem dritten Bauteil sicherzustellen und zu fixieren.

Im Folgenden wird die vorliegende Erfindung anhand von Zeichnungen ausführlich erläutert. Dabei zeigen
- Fig. 1: eine Schnittdarstellung eines Ausschnitts aus dem Frontendbereich eines Kraftfahrzeugs,
- Fig. 2: eine Schnittdarstellung der erfindungsgemäßen Vorrichtung zum Abstützen,
- Fig. 2a: eine Darstellung des Schnittes in der versetzten Ebene A-A der Figur 2,
- Fig. 3: das Verstellelement als separates Bauteil,
- Fig. 3a: eine Draufsicht auf einen Schnitt durch die Ebene A-A in Figur 3,
- Fig. 4: einen Teilbereich des Verstellelements und
- Fig. 4a: eine Draufsicht auf das Verstellelement aus Figur 4,

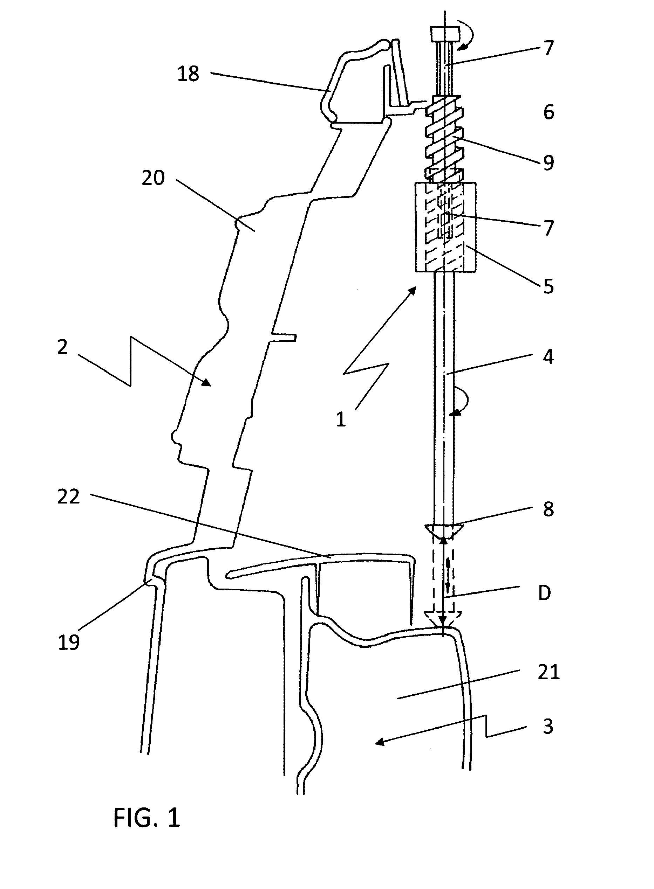

In der Figur 1, die eine Schnittdarstellung eines Teilbereichs einer Frontendstruktur eines Kraftfahrzeugs wiedergibt, ist das Funktionsprinzip der erfindungsgemäßen Abstützvorrichtung 1 anhand eines Kühlergrills 19, 20 als abzustützendes erstes Bauteil 2 und einem Stoßfängerquerträger 21 als stützendes zweites Bauteil 3 dargestellt. Die Abstützvorrichtung 1 besteht im Wesentlichen aus einem Verstellelement 4 und einem Aufnahmeelement 5. Bei der in Figur 1 gewählten Darstellung sind zwei Positionen der Abstützvorrichtung 1 zu sehen, wobei die mit durchgehender Linie gezeichnete Position dem Zustand der Abstützvorrichtung 1 vor ihrem Einsatz entspricht, was daran zu erkennen ist, dass zwischen der Abstützfläche 8 und dem stützenden Bauteil 3 ein Abstand D gegeben ist, der im vorliegenden Fall relativ groß ist, da die Abstützvorrichtung 1 bei der Montage des Kühlergrills über die Abdeckung 22 des Querträgers 21 geführt werden muss. Üblicherweise liegt der Abstand D (Verstellweg) bei ca. 3 bis 15 mm, vorzugsweise bei ca. 6 mm. In der durchgehend gezeichneten Position ragt das obere Ende des Verstellelements 4 mit dem Außengewinde 9 aus dem Aufnahmeelement 5 heraus. Auf dem oberen Ende des Verstellelements 4 sitzt eine Verstellschraube 7, die bei Inbetriebnahme der Abstützvorrichtung in einer Bohrung 6 im oberen Bereich des Verstellelements 4 eingeschraubt wird.

Durch das Drehen der Verstellschraube 7 wird auf Grund des höheren Reibschlusses der Verstellschraube 7 in der Bohrung 6 zunächst das Verstellelement 4 in das Aufnahmeelement 5 eingedreht, bis die Auflagefläche 8 auf dem stützenden zweiten Bauteil 3 zur Anlage kommt. Dieser Zustand ist bei der vorliegenden Darstellung mit unterbrochener Linie dargestellt. In dieser Position ist das obere Ende des Verstellelements 4 mit dem Außengewinde 9 vollständig von dem Aufnahmeelement 5 aufgenommen, was gestrichelt dargestellt ist. Die Verstellschraube 7 ist jetzt vollständig in das Verstellelement 4 eingedreht, was ebenfalls gestrichelt wiedergegeben ist.

Im Folgenden soll nur noch kurz auf übrigen bei dieser Darstellung gezeigten Bauteile eingegangen werden, während die Funktionsweise der erfindungsgemäßen Vorrichtung an den nachfolgenden Figuren erläutert wird. So ist in dieser Darstellung darüber hinaus noch ein Chromrahmen 18 zu sehen, der als drittes Bauteil anzusehen ist, zu dem das erste abzustützende Bauteil 2 relativ ausgerichtet werden soll. Mit Hilfe der erfindungsgemäßen Abstützvorrichtung 1 gelingt es nun, ein Absetzen oder Absinken des ersten abzustützenden Bauteils 2, nämlich des Kühlerschutzgitters 20, auch bei Dauerbelastung relativ zu einem dritten Bauteil zu verhindern. Neben dem Chromrahmen 18 ist in der gewählten Darstellung noch eine Abdeckung 22 für den Stoßfängerquerträger 21 zu sehen, der als stützendes zweites Bauteil 3 fungiert.

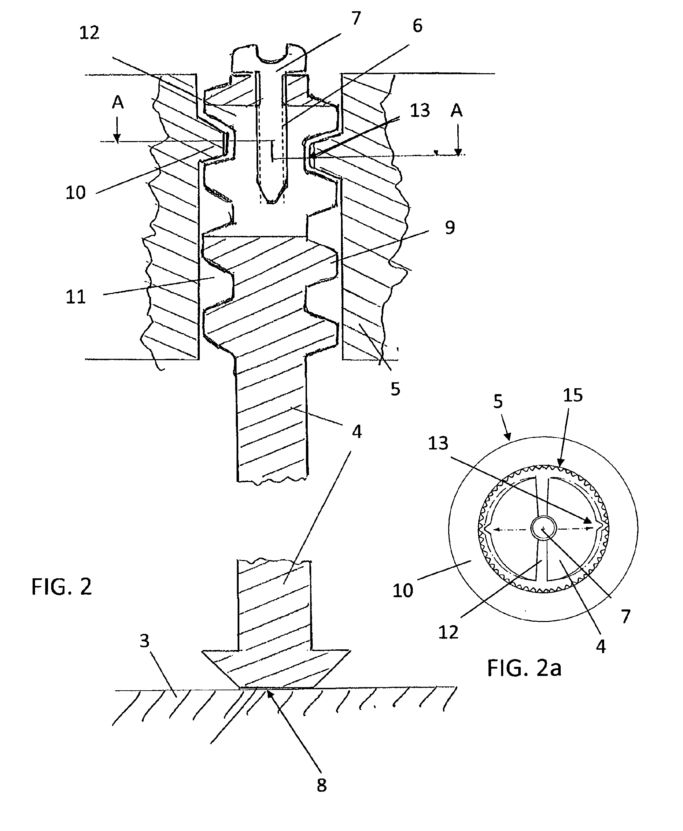

Die Figur 2 zeigt einen Längsschnitt durch Teilbereiche der erfindungsgemäßen Abstützvorrichtung 1, anhand dessen die Funktionsweise der Vorrichtung erläutert werden soll, die im Wesentlichen aus einem Verstellelement 4 und einem Aufnahmeelement 5 besteht. Das Verstellelement 4 ist teilweise als Gewindestange ausgebildet und weist an seinem oberen Ende ein Außengewinde 9 auf, das passend zu dem Innengewinde 10 der durchgehenden Bohrung 11 des Aufnahmeelements 5 ausgebildet ist. Darüber hinaus besitzt das Verstellelement 4 in seinem oberen Ende eine Bohrung 6, in die die Verstellschraube 7 eingreift. In diesem oberen Bereich des Verstellelements 4 sind im Einflussbereich der Verstellschraube 7 in axialer Richtung angeordnete Längsschlitze 12 vorgesehen, die eine Spreizung des Verstellelements 4 in diesem Bereich beim Einschrauben der Verstellschraube 7 ermöglichen. Das untere Ende des Verstellelements 4 wird durch die Abstützfläche 8 gebildet, die nach der Fertigmontage der erfindungsgemäßen Vorrichtung auf dem stützenden Bauteil 3 zur Anlage kommt, während das abzustützende Bauteil 2 fest mit dem Aufnahmeelement 4 verbunden ist.

Der Mechanismus der Fixierung des Verstellelements 4 im Aufnahmeelement 5 soll anhand der Figur 2a erläutert werden, die eine Draufsicht auf den Schnitt durch die verschobene Ebene A-A in der Figur 2 zeigt. Der Kern des Verstellelements 4 ist im Aufnahmeelement 5 angeordnet, wobei auf Grund der Schnittwahl die im Gewindegang 14 des Außengewindes 9 des Verstellelements 4 quer zum Gewindeverlauf angeordneten Zähne 13 zu sehen sind, die beim Festziehen der Schraube 7 auf Grund der durch die Schlitze 12 ermöglichte Spreizung des Verstellelements 4 in die auf der Gewindeflanke 16 des Innengewindes 10 des Aufnahmeelements 5 angeordnete Verzahnung 14 hineingedrückt werden. Dieser Zustand, der dann erreicht wird, wenn die Verstellschraube 7 vollständig in die Bohrung 6 des Verstellelements 4 eingedreht ist, ist bei der vorliegenden Darstellung mit einer unterbrochenen Linie wiedergegeben. In dieser Position ist das Verstellelement 4 gegen eine weitere Verstellung gesichert.

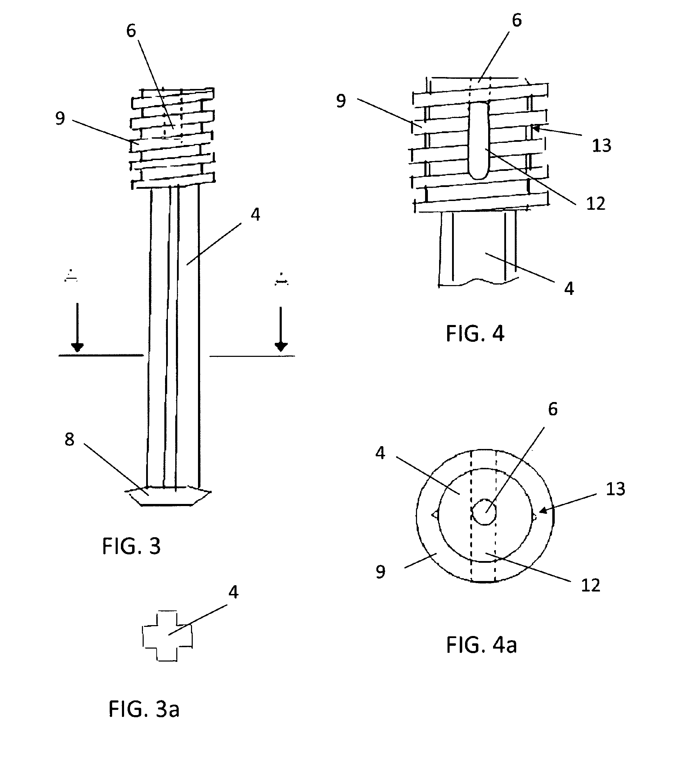

Die Figur 3 zeigt eine Seitenansicht eines in seinem oberen Teil mit einem Außengewinde 9 ausgestatteten Verstellelements 4. Die Bohrung 6 zur Aufnahme der Verstellschraube 7 ist bei dieser Darstellung unsichtbar und daher gestrichelt gezeichnet. Wie aus der Figur 3a, die eine Draufsicht auf den Schnitt durch die Ebene A-A der Figur 3 wiedergibt, besitzt der Längskörper des Verstellelements 4 eine besondere Ausgestaltung in Form eines Kreuzprofils, an dem im unteren Ende des Verstellelements 4 die Abstützfläche 8 angeordnet ist.

Die Figur 4 zeigt ebenfalls eine Seitenansicht eines Teilbereichs des Verstellelements 4, wobei die Ansicht im Vergleich zur Figur 3 um 90° gedreht ist, sodass bei dieser Ansicht die Schlitze 12 zu sehen sind, die im Bereich des Außengewindes 9 des Verstellelements 4 positioniert sind und ein Aufspreizen des Verstellelements 4 in diesem Bereich beim Einschrauben der Verstellschraube 7 in die Bohrung 6 ermöglichen. Darüber hinaus sind bei dieser Darstellung die Zähne 13 zu sehen, die quer zum Außengewinde 9 in dem Gewindegang 14 angeordnet sind und beim Spreizen des Verstellelements 4 nach außen gedrückt werden. Die Figur 4a zeigt eine Draufsicht auf das Verstellelement 4 aus Figur 4. Auch hier sind die Zähne 13 zu erkennen, die um 90° verschoben zum Schlitz 12, der bei dieser Darstellung gestrichelt gezeichnet ist, angeordnet sind. Beim Einschrauben der Verstellschraube 7 in die Bohrung 6 wird dieser Bereich des Verstellelements 4 zusammen mit den Zähnen 13 nach außen gedrückt, sodass eine Fixierung des Verstellelements 4 in der Verzahnung 14 des Aufnahmeelements 5 erfolgt und so eine Sicherung gegen weiteres Verstellen erreicht wird.

### Bezugszeichenliste

- 1: Abstützvorrichtung
- 2: Erstes Bauteil
- 3: Zweites Bauteil
- 4: Verstellelement
- 5: Aufnahmeelement
- 6: Bohrung
- 7: Verstellschraube
- 8: Abstützfläche
- 9: Außengewinde
- 10: Innengewinde
- 11: Bohrung
- 12: Längsschlitz
- 13: Zahn
- 14: Gewindegang
- 15: Verzahnung
- 16: Gewindeflanke
- 18: Chromrahmen
- 19: Kühlergrill
- 20: Kühlergrill
- 21: Stoßfängerquerträger
- 22: Abdeckung

## Patentansprüche

1. Vorrichtung (1) zum Abstützen eines ersten Bauteils (2) an einem zweiten Bauteil (3) mit selbsttätigem Ausgleich von fertigungs- montagebedingten Toleranzen zwischen den beiden Bauteilen (2, 3), wobei die Abstützvorrichtung (1) ein an einem ersten, oberen Ende eine Bohrung (6) zur Aufnahme einer Verstellschraube (7) und an einem zweiten, unteren Ende eine Abstützfläche (8) aufweisendes, zumindest teilweise als Gewindestange ausgebildetes Verstellelement (4) mit einem Außengewinde (9) sowie ein eine zumindest teilweise mit einem Innengewinde (10) ausgestattete durchgehende Bohrung (11) aufweisendes Aufnahmeelement (5) zur Aufnahme des Verstellelements (4) umfasst.

2. Vorrichtung nach Anspruch 1, wobei die Vorrichtung (1) als separates Bauteil ausgebildet und über das Aufnahmeelement (5) mit dem abzustützenden ersten Bauteil (2) fest verbunden ist.

3. Vorrichtung nach Anspruch 1, wobei das Aufnahmeelement (5) Teil des abzustützenden ersten Bauteils (2) ist.

4. Vorrichtung nach einem der Ansprüche 1 bis 3,
**dadurch gekennzeichnet, dass**
die Abstützfläche (8) des Verstellelements (4) zur Auf- bzw. Anlage auf dem stützenden zweiten Bauteil (3) vorgesehen ist.

5. Vorrichtung nach einem der Ansprüche 1 bis 4,
**dadurch gekennzeichnet, dass**
das Außengewinde (9) im oberen Ende des Verstellelements (4) im Bereich der Bohrung (6) für die Verstellschraube (7) angeordnet ist.

6. Vorrichtung nach einem der Ansprüche 1 bis 5,
**dadurch gekennzeichnet, dass** im Verstellelement (4) im Bereich des Außengewindes (9) mindestens zwei bis zur Bohrung (6) durchgehende Längsschlitze (12) vorgesehen sind.

7. Vorrichtung nach einem der Ansprüche 1 bis 6,
**dadurch gekennzeichnet, dass** das Verstellelement (4) mindestens zwei im Gewindegang (14), quer zum Gewindeverlauf angeordnete Zähne (13) aufweist.

8. Vorrichtung nach einem der Ansprüche 1 bis 7,
**dadurch gekennzeichnet, dass** das Aufnahmeelement (5) eine auf der Flanke des Innengewindes (10) in axialer Richtung, quer zum Gewindeverlauf angeordnete Verzahnung (15) aufweist.

9. Vorrichtung nach einem der Ansprüche 1 bis 8,
**dadurch gekennzeichnet, dass** sowohl das Anlageelement (5) als auch das Verstellelement (4) aus einem thermoplastischen Kunststoff gefertigt sind.

10. Vorrichtung nach einem der Ansprüche 1 bis 9,
**dadurch gekennzeichnet, dass** die Verstellschraube (7) eine Metallschraube mit einem kunststoffgerechten bzw. metrischen Gewinde ist, wobei die Spitze der Verstellschraube (7) ohne Gewinde in Form einer Nagelspitze ausgebildet ist.

11. Vorrichtung nach einem der Ansprüche 1 bis 10,
**dadurch gekennzeichnet, dass**
die Abstützfläche (8) des Verstellelements (4) mit einer gleithemmenden Folie beschichtet oder die Oberfläche der Abstützfläche (8) aufgeraut ist.

12. Vorrichtung nach einem der Ansprüche 1 bis 11,
**dadurch gekennzeichnet, dass**
die Abstützvorrichtung (1) nur mit dem abzustützenden ersten Bauteil (2) fest verbunden ist.

13. Vorrichtung nach einem der Ansprüche 1 bis 12,
**dadurch gekennzeichnet, dass**
das abzustützende erste Bauteil (2) und das stützende zweite Bauteil (3) jeweils Karosseriebauteile für ein Kraftfahrzeug sind.

14. Vorrichtung nach Anspruch 13,
**dadurch gekennzeichnet, dass**
das abzustützende erste Bauteil (2) ein Kühlerschutzgitter (19, 20) und das stützende zweite Bauteil (3) ein Stoßfängerquerträger (21) ist.

15. Vorrichtung nach Anspruch 13,
**dadurch gekennzeichnet, dass**
das abzustützende erste Bauteil (2) ein mit einem Kühlerschutzgitter (19, 20) kombinierter Stoßfänger ist.
